# EUROPÄISCHE PATENTSCHRIFT

(11) **EP 3 316 429 B1**
(45) Veröffentlichungstag und Bekanntmachung des Hinweises auf die Patenterteilung: **07.08.2019**
(21) Anmeldenummer: 17196048.7
(22) Anmeldetag: 12.10.2017
(51) Int. Cl.: H02G 11/02

(54) **KABELTROMMEL**
CABLE REEL
TAMBOUR POUR CÂBLE

(30) Priorität: 26.10.2016 DE 102016221099
(43) Veröffentlichungstag der Anmeldung: 02.05.2018
(73) Patentinhaber: Schill GmbH & Co. KG, 70734 Fellbach (DE)
(72) Erfinder: SCHILL, Ingo, 70736 Fellbach (DE)
(74) Vertreter: BRP Renaud & Partner mbB Rechtsanwälte Patentanwälte Steuerberater

(56) Entgegenhaltungen:
- WO-A1-96/26565
- DE-U1- 8 436 765
- DE-U1-202010 006 180
- Hedi: "Hedi product range", , 31. Dezember 2014 (2014-12-31), XP055452246, Gefunden im Internet: URL:http://www.hedi.de/files/hedi_katalog_ englisch_komplett_12_2014_72dpi.pdf [gefunden am 2018-02-19]
- Weingärtner Kabel Gmbh: "Katalog Elektro-Grosshandel", , 31. Dezember 2012 (2012-12-31), XP055452249, Gefunden im Internet: URL:http://www.aevelektro.de/.cm4all/iproc .php/Katalog.pdf?cdp=a [gefunden am 2018-02-19]

## Beschreibung

Die vorliegende Erfindung betrifft eine Kabeltrommel mit einem Traggestell mit zumindest zwei Füßen, einem Tragegriff und einem Lagerzapfen, gemäß dem Oberbegriff des Anspruchs 1.

Gattungsgemäße Kabeltrommeln sind hinlänglich bekannt und werden sowohl im gewerblichen und industriellen Bereich als auch in Privathaushalten vielfältig eingesetzt. Üblicherweise dienen derartige Kabeltrommeln zum Verlängern einer elektrischen Leitung.

Aus HEDI Product Range 12/2014 ist eine Kabeltrommel mit einem Drahtgestell mit zumindest zwei Füßen, einem Tragegriff und einem Lagerzapfen bekannt, auf dem eine Kabelspule mit einer Nabe drehbar gelagert ist.

Aus der DE 84 36 765 U1 ist ebenfalls eine Kabeltrommel mit einem Traggestell mit zumindest zwei Füßen, einem Tragegriff und einem Lagerzapfen bekannt, auf dem eine Kabelspule mit einer Nabe drehbar gelagert ist, wobei die Kabelspule einen Technikraum aufweist, der von einer zumindest eine Steckdose aufweisenden Abdeckung verschlossen ist. Das Dokument DE202010006180U offenbart eine Aufnahme für eine Leitung, insbesondere in Form einer Kabeltrommel.

Die aus dem Stand der Technik bekannten Kabeltrommeln weisen dabei im Inneren einen Technikraum auf, in welchem beispielsweise eine Aufteilung einzelner Kabellitzen auf in einer Abdeckung des Technikraums angeordnete Steckdosen vorgenommen wird. So ist üblicherweise am freien Ende des elektrischen Kabels ein Stecker angeordnet, während in der Kabelspule bzw. in deren Abdeckung mehrere Steckdosen angeordnet sind. Ebenfalls weit verbreitet ist auch ein sogenannter Thermoschutzschalter, der beispielsweise in der Art eines Bimetalls funktioniert und bei Erreichen einer vordefinierten Temperatur einen elektrischen Kontakt unterbricht. Der Thermoschutzschalter ist dabei von der Abdeckung aus betätigbar, so dass nach einer Abkühlung das Bimetall durch ein Drücken des Thermoschutzschalters mechanisch wieder in seine leitende Stellung zurückverstellt werden kann.

Die aus dem Stand der Technik bekannten Kabeltrommeln sind dabei auch oftmals mit entsprechenden Abdeckungen an den Steckdosen versehen und dadurch spritzwassergeschützt, wodurch auch eine Anwendung im Freien üblicherweise gefahrlos möglich ist.

Nachteilig bei den aus dem Stand der Technik bekannten Kabeltrommeln ist jedoch, dass diese erhöhten Anforderungen im Hinblick auf eine Dichtheit, beispielsweise bei zeitweiligem Untertauchen, nicht erfüllen und dadurch in bestimmten Einsatzbereichen und unter bestimmten Einsatzbedingungen nicht verwendbar sind.

Die vorliegende Erfindung beschäftigt sich daher mit dem Problem, für eine Kabeltrommel der gattungsgemäßen Art eine verbesserte oder zumindest eine alternative Ausführungsform anzugeben, die insbesondere eine erhöhte Dichtheit gegenüber drückendem Wasser aufweist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Kabeltrommel im Bereich einer drehbar auf einem Lagerzapfen gelagerten Kabelspule abzudichten und dadurch Voraussetzungen für eine erhöhte Wasserdichtheit und insbesondere auch Voraussetzungen für die Einstufung in die Schutzart IP67 zu schaffen. Die erfindungsgemäße Kabeltrommel weist dabei in bekannter Weise ein Traggestell mit zumindest zwei Füßen, einem Tragegriff und einem Lagerzapfen auf, wobei auf dem Lagerzapfen eine Kabelspule mit einer Nabe drehbar gelagert ist. Die Kabelspule selbst weist im Inneren einen Technikraum auf, der von einer zumindest eine Steckdose aufweisenden Abdeckung verschlossen ist. Die Abdeckung ist dabei üblicherweise mit der Kabelspule verschraubt. Erfindungsgemäß ist nun der Technikraum gegenüber dem Lagerzapfen und gegenüber der Abdeckung druckwasserdicht abgedichtet wobei zusätzlich die zumindest eine Steckdose und ein Stecker an einem diese verbindenden Kabel druckwasserdicht ausgebildet sind. Hierdurch ist es erstmals möglich, die gesamte Kabeltrommel druckwasserdicht auszubilden, so dass diese in die Schutzart IP 67 eingruppiert werden kann. Hierdurch ergeben sich ungeahnte neue Einsatzgebiete.

Erfindungsgemäß weist die Kabelspule an einer in den Technikraum weisenden Stirnseite eine koaxial zur Nabe ausgebildete erste Ringnut auf, die die Nabe mit größerem Durchmesser umgibt. An einer radial innen gelegenen Nutflanke der ersten Ringnut ist dabei eine zweite Ringnut vorgesehen, in der eine O-Ringdichtung angeordnet ist. Zusätzlich vorgesehen ist eine Abdeckkappe, die derart in die erste Ringnut eingeschoben wird, dass die O-Ringdichtung zwischen der Abdeckkappe und der inneren Nutflanke eingeklemmt ist und dadurch den Technikraum abdichtet. Die Abdeckkappe ist dabei als einfacher, topfförmiger Deckel ausgeführt und bewirkt die bislang kritische Abdichtung der Kabelspule an ihrer Nabe zum Lagerzapfen. Über die derart ausgebildete Kabelspule mit der O-Ringdichtung und der Abdeckkappe kann somit ein Eindringen von Druckwasser über einen zwar sehr kleinen, aber stets zwischen der Nabe und dem Lagerzapfen vorhandenen Ringraum verhindert werden, wodurch dieser Bereich erstmals druckwasserdicht abgedichtet und damit die Grundlage für eine komplett der Schutzart IP67 entsprechenden Kabeltrommel geschaffen werden kann.

Selbstverständlich ist in diesem Zusammenhang ebenfalls zu nennen, dass auch die Abdeckung druckwasserdicht mit der Kabelspule verschraubt und die Steckdosen und ein Stecker eines auf der Kabelspule aufgewickelten Kabels ebenfalls druckwasserdicht ausgeführt sind. Die Abdichtung der zuletzt genannten Komponenten ist dabei jedoch im Vergleich zur druckwasserdichten Abdichtung der Kabelspule relativ zum Lagerzapfen vergleichsweise einfach möglich.

Bei einer vorteilhaften Weiterbildung der erfindungsgemäßen Lösung sind in der Abdeckung insgesamt drei Steckdosen vorgesehen. Hierdurch wird eine Mehrfachsteckdose bereitgestellt, wobei sämtliche Steckdosen in diesem Fall druckwasserdicht ausgebildet und ebenfalls druckwasserdicht in der Abdeckung angeordnet sind, so dass über die Steckdosen kein Druckwasser in den dahintergelegenen Technikraum gelingen kann. Die Abdeckung selbst ist dabei selbstverständlich ebenfalls druckwasserdicht mit der Kabelspule verbunden, insbesondere verschraubt, wobei dies beispielsweise entweder über eine zwischen der Abdeckung der Kabelspule angeordnete Dichtung erfolgen kann oder aber über eine druckwasserdichte Verklebung.

Zweckmäßig ist die Kabelspule mittels eines Federrings auf dem Lagerzapfen des Traggestells gehalten. Ein derartiger Federring ermöglicht ein vergleichsweise einfaches drehbares Fixieren der Abdeckspule auf dem Lagerzapfen, ohne dass befürchtet werden muss, dass sich die Kabelspule beim Abrollen des Kabels von dem Lagerzapfen löst. Der Federring ist dabei vom Technikraum aus zugänglich und somit auch zumindest leicht montierbar. In analoger Weise könnte selbstverständlich auch eine Art Splint zur Fixierung der Kabelspule auf dem Lagerzapfen vorgesehen sein.

Zweckmäßig ist in der Abdeckung ein Thermoschutzschalter angeordnet, der mittels einer flexiblen Abdeckkappe abgedeckt ist, wobei die Abdeckkappe mittels eines Klemmstücks dicht mit der Abdeckung verschraubt ist. Neben den in der Abdeckung vorgesehenen Steckdosen muss selbstverständlich auch der Thermoschutzschalter einerseits bedienbar, andererseits aber druckwasserdicht ausgeführt sein, um die gesamte Kabeltrommel druckwasserdicht und damit entsprechend der Schutzart IP67 ausführen zu können. Die Abdeckkappe ist dabei aus einem gummiartigen Kunststoff ausgebildet, der mittels des Klemmstücks dicht mit der Abdeckung verklemmt ist. Zur Abdichtung der zur Befestigung des Klemmstücks verwendeten Schrauben, können diese mittels Kleber von einer Rückseite der Abdeckung her abgedichtet werden. Bei einer weiteren vorteilhaften Ausführungsform der erfindungsgemäßen Lösung ist die Kabeltrommel samt Kabel, Stecker und Steckdose für 230 Volt und/oder für 380 Volt ausgelegt. Diese nicht abschließende Aufzählung lässt erahnen, dass für die gängigsten Anwendungsfälle, das heißt einem Zweiphasenwechselstrom oder einem Dreiphasenwechselstrom (Starkstrom, Drehstrom), die erfindungsgemäße Kabeltrommel eingesetzt werden kann. Hierdurch eröffnet sich auch ein besonders breites Anwendungsspektrum für die erfindungsgemäße Kabeltrommel. Dabei ist selbstverständlich klar, dass in der Abdeckung sowohl Steckdosen für 230V und/oder 380V angeordnet sein können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: eine Ansicht auf eine erfindungsgemäße Kabeltrommel,
- Fig. 2: eine Detaildarstellung aus Fig. 3 im Bereich einer Abdichtung einer Kabelspule zu einem Lagerzapfen eines Traggestells der Kabeltrommel,
- Fig. 3: eine Schnittdarstellung durch die erfindungsgemäße Kabeltrommel,
- Fig. 4: eine weitere Schnittdarstellung durch die erfindungsgemäße Kabeltrommel im Bereich einer Kabelverschraubung,
- Fig. 5: eine Abdeckkappe und ein Klemmstück für einen in einer Abdeckung der Kabeltrommel angeordneten Thermoschutzschalter in einer Schnittdarstellung.

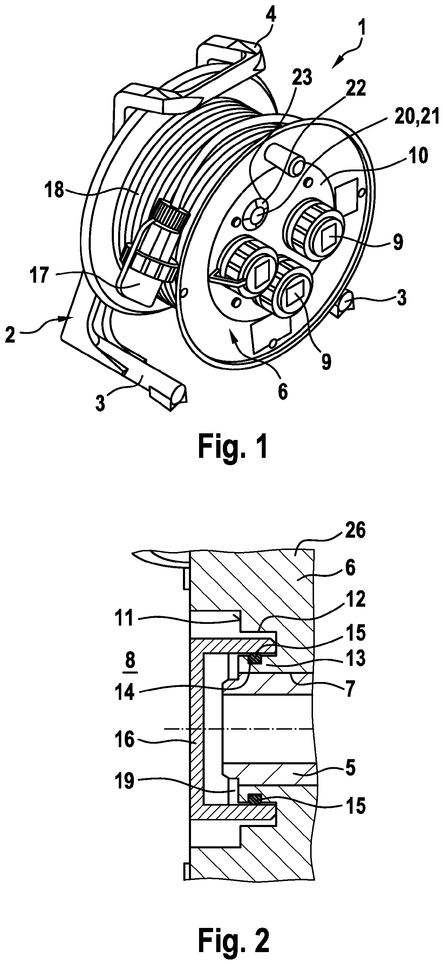

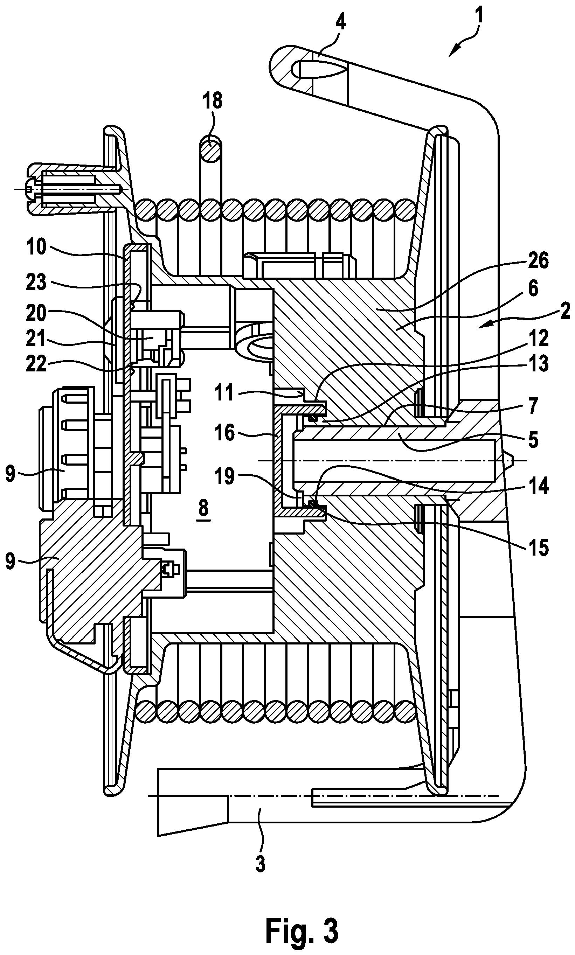

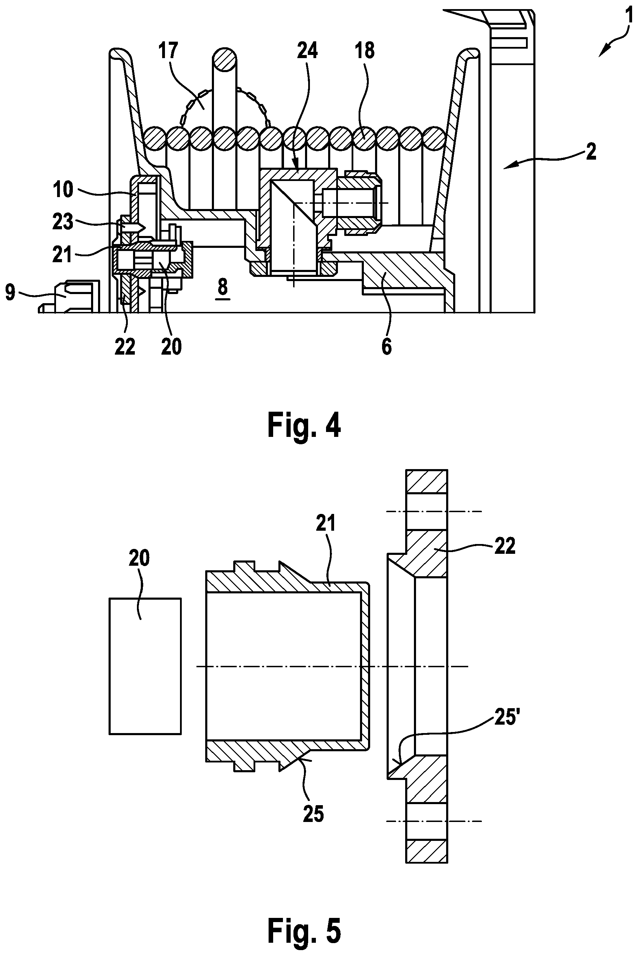

Entsprechend den Figuren 1 und 3, weist eine erfindungsgemäße Kabeltrommel 1 ein Traggestell 2 mit zumindest zwei Füßen 3, einem Tragegriff 4 und einem Lagerzapfen 5 auf, wobei auf dem Lagerzapfen 5 eine Kabelspule 6 mit einer Nabe 7 drehbar gelagert ist. Die Kabelspule 6 besitzt darüber hinaus einen Technikraum 8 (vergleiche auch die Figuren 2 und 4), der von einer zumindest eine Steckdose 9 aufweisenden Abdeckung 10 dicht abgedeckt ist. Um nun die erfindungsgemäße Kabeltrommel 1 druckwasserdicht, insbesondere gemäß der Schutzart IP67 ausführen zu können, wird der zwar äußerst kleine aber zur Drehbewegung der Kabelspule 6 auf dem Lagerzapfen 5 erforderliche Ringraum zwischen der Nabe 7 der Kabelspule 6 und der Außenmantelfläche des Lagerzapfens 5 druckwasserdicht abgedichtet. Dabei sind auch die zumindest eine Steckdose 9 in der Abdeckung 10 und ein Stecker 17 an einem Kabel 18, welches auf der Kabelspule 6 aufgewickelt bzw. aufwickelbar ist, ebenfalls druckwasserdicht ausgebildet. Betrachtet man dabei die Kabeltrommel 1 gemäß der Figur 1, so kann man erkennen, dass an dieser im Bereich der Abdeckung 10 insgesamt drei Steckdosen 9 angeordnet sind, die selbstverständlich jeweils druckwasserdicht verschließbar bzw. ausgebildet sind. In gleicher Weise ist selbstverständlich auch die Abdeckung 10 druckwasserdicht mit der Kabelspule 6 verbunden, beispielsweise über eine entsprechende Verschraubung durch Einklemmen einer zwischengelegten Dichtung oder durch ein druckwasserdichtes Verkleben. Das Kabel weist dabei eine Länge von ca. 25m, 40m oder 50m auf.

Die Kabeltrommel 1 ist dabei samt Kabel 18, Stecker 17 und Steckdose 9 für 230V oder für 380V ausgelegt. Dabei ist selbstverständlich klar, dass in der Abdeckung 10 sowohl Steckdosen 9 für 230V und/oder 380V angeordnet sein können.

Erfindungsgemäß geschieht dies dadurch, dass die Kabelspule 6 an einer in den Technikraum 8 weisenden Stirnseite 11 eine koaxial zur Nabe 7 ausgebildete erste Ringnut 12 aufweist, die die Nabe 7 ringförmig umgibt. Diese erste Ringnut 12 kann auch bei bislang bekannten Kabelspulen 6 durch ein Ausfräsen von Rippen 26 hergestellt werden. An einer radial innen gelegenen Nutflanke 13 der Ringnut 12 ist eine zweite Ringnut 14 vorgesehen, in der eine O-Ringdichtung 15 (vergleiche auch die Figur 2) angeordnet ist. Darüber hinaus ist erfindungsgemäß eine Abdeckkappe 16 vorgesehen, die derart in die erste Ringnut 12 eingeschoben ist, dass die O-Ringdichtung 15 zwischen einer Innenmantelfläche der Abdeckkappe 16 und der Nutflanke 13 eingeklemmt ist und dadurch der Technikraum 8 abgedichtet werden kann. Die Abdeckkappe 16 ist dabei als fertigungstechnisch einfach und zugleich kostengünstig herzustellendes topfförmiges Plastikbauteil ausgebildet.

Durch die erstmals bei der erfindungsgemäßen Kabeltrommel 1 mögliche druckwasserdichte Abdichtung im Bereich der Nabe 7 und dem Lagerzapfen 5, kann ein druckwasserdichtes Abdichten des Technikraums 8 erreicht werden. Um ein Abfallen der Kabelspule 6 von dem Lagerzapfen 5 während des Ab- oder Aufrollens des Kabels 18 verhindern zu können, ist vorzugsweise ein Federring 19 vorgesehen, mittels welchem die Kabelspule 6 auf dem Lagerzapfen 5 fixiert ist. Der Federring 19 ist dabei vom Technikraum 8 aus zugänglich und dadurch leicht zu montieren bzw. zu demontieren. Anstelle des Federrings 19 kann selbstverständlich auch eine Art Splint vorgesehen sein. Betrachtet man die Figur 1 weiter, so kann man erkennen, dass in der Abdeckung 10 zusätzlich noch ein Thermoschutzschalter 20 angeordnet ist, der mittels einer flexiblen Abdeckkappe 21 (vergleiche Figur 5) abgedeckt ist, wobei die Abdeckkappe 21 mittels eines Klemmstücks 22 (vergleiche insbesondere auch die Figur 5) druckwasserdicht mit der Abdeckung 10 verschraubt ist. Die hierfür verwendeten Schrauben 23 sind beispielsweise in den Figuren 1 und 3 zu sehen und werden zur druckwasserdichten Abdichtung von der Rückseite der Abdeckung 10 mittels Heißkleber abgedichtet. Betrachtet man die Figur 5, so kann man an der den Thermoschutzschalter 20 abdeckenden Abdeckkappe 21 eine konische Dichtfläche 25 sehen, die mit einer komplementär dazu ausgebildeten und am Klemmstück 22 angeordneten Dichtfläche 25' zusammenwirkt und beim Festschrauben des Klemmstücks 22 die druckwasserdichte Abdichtung bewirkt.

Um nun zusätzlich noch das Kabel 18 druckwasserdicht in den Technikraum 8 führen zu können, ist gemäß der Figur 4 eine abgewinkelte Kabelverschraubung 24 vorgesehen. Die abgewinkelte Kabelverschraubung 24 kann dabei eine integrierte Zugentlastung darstellen bzw. beinhalten.

Mittels der erfindungsgemäßen Kabeltrommel 1 und insbesondere mittels der darin erstmals eingesetzten, erfindungsgemäßen Abdichtung der Kabelspule 6 relativ zum Lagerzapfen 5 des Traggestells 2, kann erstmals eine Eingruppierung in die Schutzart IP67 erreicht werden, so dass derartige Kabeltrommeln 1 auch bei äußerst widrigen Bedingungen und sogar zumindest zeitweise unter Wasser eingesetzt werden können.

## Patentansprüche

1. Kabeltrommel (1) mit einem Traggestell (2) mit zumindest zwei Füßen (3), einem Tragegriff (4) und einem Lagerzapfen (5), auf dem eine Kabelspule (6) mit einer Nabe (7) drehbar gelagert ist, wobei die Kabelspule (6) einen Technikraum (8) aufweist, der von einer zumindest eine Steckdose (9) aufweisenden Abdeckung (10) verschlossen ist,
- wobei der Technikraum (8) gegenüber dem Lagerzapfen (7) und gegenüber der Abdeckung (10) druckwasserdicht abgedichtet ist,
- wobei eine abgewinkelte Kabelverschraubung (24) vorgesehen ist, über die ein Kabel (18) druckwasserdicht in den Technikraum (8) geführt ist, **dadurch gekennzeichnet,**
- **dass** die zumindest eine Steckdose (9) und ein Stecker (17) an einem diese verbindenden Kabel (18) druckwasserdicht ausgebildet sind,
- **dass** die Kabelspule (6) an einer in den Technikraum (8) weisenden Stirnseite (11) eine koaxial zur Nabe (7) ausgebildete erste Ringnut (12) aufweist,
- **dass** an einer radial innen gelegenen Nutflanke (13) der ersten Ringnut (12) eine zweite Ringnut (14) vorgesehen ist, in der eine O-Ringdichtung (15) angeordnet ist,
- **dass** eine Abdeckkappe (16) vorgesehen ist, die derart in die erste Ringnut (12) eingeschoben ist, dass die O-Ringdichtung (15) zwischen der Abdeckkappe (16) und der Nutflanke (13) eingeklemmt ist und den Technikraum (8) abdichtet,.

2. Kabeltrommel nach Anspruch 1,
**dadurch gekennzeichnet,**
**dass** insgesamt drei Steckdosen (9) in der Abdeckung (10) vorgesehen sind.

3. Kabeltrommel nach einem der vorhergehenden Ansprüche,
**dadurch gekennzeichnet,**
**dass** die Kabelspule (6) mittels eines Federrings (19) auf dem Lagerzapfen (7) gehalten ist.

4. Kabeltrommel nach einem der vorhergehenden Ansprüche,
**dadurch gekennzeichnet,**
**dass** in der Abdeckung (10) ein Thermoschutzschalter (20) angeordnet ist, der mittels einer flexiblen Abdeckkappe (21) abgedeckt ist, wobei die Abdeckkappe (21) mittels eines Klemmstücks (22) druckwasserdicht mit der Abdeckung (10) verschraubt ist.

5. Kabeltrommel nach einem der Ansprüche 1 bis 4,
dass das Kabel (18), der Stecker (17), die zumindest eine Steckdose (9), die Kabelverschraubung (24) und der Thermoschutzschalter (20) der Schutzart IP67 entsprechen.

6. Kabeltrommel nach einem der Ansprüche 1 bis 5,
**dadurch gekennzeichnet,**
**dass** die Kabeltrommel (1) samt Kabel (18), Stecker (17) und Steckdose (9) für 230V und/oder für 380V ausgelegt ist.

7. Kabeltrommel nach einem der vorhergehenden Ansprüche,
**dadurch gekennzeichnet,**
**dass** die Kabeltrommel (1) der Schutzart IP67 entspricht.

8. Kabeltrommel nach einem der Ansprüche 1 bis 7,
dass das Kabel (18) eine Länge von zumindest ca. 25m, insbesondere von ca. 33m, bevorzugt von ca. 40m oder 50m, aufweist.

## Claims

1. Cable drum (1) with a supporting frame (2) with at least two feet (3), a carrying handle (4) and a bearing journal (5) on which a cable reel (6) with a hub (7) is rotatably mounted, the cable reel (6) having a technical space (8) which is closed by a cover (10) having at least one socket (9),
- wherein the technical space (8) is sealed relative to the bearing journal (7) and relative to the cover (10) so as to be resistant to pressurised water,
- wherein an angled cable gland (24) is provided via which a cable (18) is guided into the technical space (8) so as to be resistant to pressurised water, **characterised in that**
- the at least one socket (9) and one plug (17) on a cable (18) connecting them are designed to be resistant to pressurised water,
- the cable reel (6) has a first annular groove (12) formed coaxially with the hub (7) on an end face (11) pointing into the technical space (8),
- a second annular groove (14), in which an O-ring seal (15) is arranged, is provided on a radially inner groove flank (13) of the first annular groove (12),
- a cover cap (16) is provided and is pushed into the first annular groove (12) in such a way that the O-ring seal (15) is clamped between the cover cap (16) and the groove flank (13) and seals the technical space (8).

2. Cable drum according to claim 1,
**characterised in that**
a total of three sockets (9) are provided in the cover (10).

3. Cable drum according to any of the preceding claims,
**characterised in that**
the cable reel (6) is held on the bearing journal (7) by a spring washer (19).

4. Cable drum according to any of the preceding claims,
**characterised in that**
a thermal protection switch (20) is arranged in the cover (10) and is covered by a flexible cover cap (21), the cover cap (21) being screwed to the cover (10) using a clamping piece (22) so as to be resistant to pressurised water.

5. Cable drum according to any of claims 1 to 4,
that the cable (18), the plug (17), the at least one socket (9), the cable gland (24) and the thermal protection switch (20) correspond to protection class IP67.

6. Cable drum according to any of claims 1 to 5,
**characterised in that**
the cable drum (1), together with the cable (18), plug (17) and socket (9), is designed for 230V and/or for 380V.

7. Cable drum according to any of the preceding claims,
**characterised in that**
the cable drum (1) corresponds to protection class IP67.

8. Cable drum according to any of claims 1 to 7,
that the cable (18) has a length of at least approximately 25m, in particular of approximately 33m, preferably of approximately 40m or 50m.

## Revendications

1. Enrouleur de câble (1) avec un cadre porteur (2) muni d'au moins deux pieds (3), avec une poignée de manutention (4) et avec un tourillon (5) sur lequel est logée une bobine de câble (6) avec un moyeu (7) de manière à pouvoir tourner, laquelle bobine de câble (6) présente un espace technique (8) qui est fermé par un couvercle (10) présentant au moins une prise femelle (9),
- dans lequel l'espace technique (8) est étanche à l'eau sous pression par rapport au tourillon (7) et par rapport au couvercle (10),
- dans lequel il est prévu un passe-câble à vis (24) coudé par l'intermédiaire duquel un câble (18) est guidé de manière étanche à l'eau sous pression jusque dans l'espace technique (8),
**caractérisé en ce que**
- l'au moins une prise femelle (9) et une prise mâle (17) au niveau d'un câble (18) reliant celles-ci sont réalisées étanches à l'eau sous pression,
- la bobine de câble (6) présente au niveau d'un côté frontal (11) dirigé vers l'espace technique (8) une première rainure annulaire (12) réalisée coaxiale par rapport au moyeu (7),
- il est prévu au niveau d'un flanc de rainure (13), placé de façon radiale à l'intérieur, de la première rainure annulaire (12) une seconde rainure annulaire (14) dans laquelle est placé un joint torique d'étanchéité (15),
- il est prévu un capuchon couvrant (16) qui est inséré de telle manière dans la première rainure annulaire (12) que le joint torique d'étanchéité (15) est coincé entre le capuchon couvrant (16) et le flanc de rainure (13), et qu'il rend étanche l'espace technique (8).

2. Enrouleur de câble selon la revendication 1,
**caractérisé en ce que**
il est prévu au total trois prises femelles (9) dans le couvercle (10).

3. Enrouleur de câble selon l'une quelconque des revendications précédentes,
**caractérisé en ce que**
la bobine de câble (6) est maintenue sur le tourillon (7) au moyen d'une rondelle-ressort (19).

4. Enrouleur de câble selon l'une quelconque des revendications précédentes,
**caractérisé en ce que**
un disjoncteur thermique (20) est agencé dans le couvercle (10), lequel disjoncteur thermique est couvert au moyen d'un capuchon couvrant (21) souple, dans lequel le capuchon couvrant (21) est vissé sous pression de manière étanche à l'eau avec le couvercle (10) au moyen d'une pièce de serrage (22).

5. Enrouleur de câble selon l'une quelconque des revendications 1 à 4,
que le câble (18), la prise mâle (17), l'au moins une prise femelle (9), le passe-câble à vis (24) et le disjoncteur thermique (20) correspondent à l'indice de protection IP67.

6. Enrouleur de câble selon l'une quelconque des revendications 1 à 5,
**caractérisé en ce que**
l'enrouleur de câble (1) avec câble (18), prise mâle (17) et prise femelle (9) est conçu pour du 230 V et/ou pour du 380 V.

7. Enrouleur de câble selon l'une quelconque des revendications précédentes,
**caractérisé en ce que**
l'enrouleur de câble (1) correspond à l'indice de protection IP67.

8. Enrouleur de câble selon l'une quelconque des revendications 1 à 7,
que le câble (18) présente une longueur d'au moins 25 m environ, en particulier de 33 m environ, de préférence de 40 m ou 50 m environ.
